# EUROPEAN PATENT SPECIFICATION

(11) **EP 3 961 650 B1**
(45) Date of publication and mention of the grant of the patent: **03.01.2024**
(21) Application number: 20915763.5
(22) Date of filing: 10.08.2020
(51) Int. Cl.: G21C 3/324, G21C 3/328, G21C 3/344

(54) **NUCLEAR REACTOR FUEL ASSEMBLY**
KERNBRENNSTABBÜNDEL
ASSEMBLAGE DE COMBUSTIBLE DE RÉACTEUR NUCLÉAIRE

(30) Priority: 22.01.2020 RU 2020102355
(43) Date of publication of application: 02.03.2022
(73) Proprietor: Joint-Stock Company "TVEL", Moscow 115409 (RU); Public Joint Stock Company "Mashinostroitelny Zavod", Elektrostal, 144001 (RU)
(72) Inventor: AKSENOV, Pyotr Mikhaylovich, Moskovskaya obl., 144010 (RU); LUZAN, Yuriy Vasil'yevich, Moskovskaya obl., 144004 (RU); BONDAR', Yuriy Nikolaevich, Moskovskaya obl., 144009 (RU); KRYLOV, Alexandr Leopol'dovich, Moskovskaya obl., 144009 (RU); SUSLIN, Vadim Ivanovich, Moskovskaya obl., 144007 (RU); KOZYREV, Roman Yevgen'evich, Moskovskaya obl., 144009 (RU); KUKUSHKIN, Yuriy Anatol'evich, Moscow, 117303 (RU)
(74) Representative: Yalçiner Patent and Consulting Ltd.
(86) International application number: PCT/RU2020/000414
(87) International publication number: WO 2021/150133

(56) References cited:
- FR-A1- 3 018 386
- GB-A- 1 254 040
- RU-C1- 2 410 771
- RU-C2- 2 234 752

## Description

### TECHNICAL FIELD

The invention is related to nuclear power engineering, namely, to fuel assemblies of VVER type nuclear reactors.

### BACKGROUND

In the prior art there is a design of a fuel assembly for VVER-440 type nuclear reactors (see P. L. Kirillov et al. Guide for thermohydraulic estimates (nuclear reactors, heat exchangers, steam generators). M.: Energoatomizdat, 1990, p. 317), which consists of a bundle of 126 fuel elements 1, arranged in a triangular grid, fixed in a lower carrier grid 2 and connected to each other by spacer grids 3, fixed by a joint that is movable in the axial direction on a centre tube 4.

The movable joint of spacer grids with the centre tube provides for their free axial displacement for compensation of unevenness of temperature and radiation elongations of fuel elements and centre tube in process of operation.

The fuel assembly comprises a head 5 and a tail 6, connected by a hexagonal casing.

Availability of a rather thick casing, with thickness of 1.5...2 mm, significantly deteriorates physical characteristics of the known fuel assembly and the conditions of heat exchange in emergencies.

Besides, labour intensiveness of fuel assembly manufacturing increases significantly due to the need to do stamping, welding, and subsequent annealing of the casing on a mandrel.

The significant fault of the carrier grid in the known fuel assembly is the possibility to pass foreign objects of large sizes with the coolant flow. For instance, the large width and length of drain holes in the standard lower carrier grid makes it possible to pass foreign cylindrical objects into the bundle of the fuel elements with diameter of up to 6.3 mm and flat objects with width of up to 13.4 mm at thickness of up to 5.2 mm.

The completed experimental trials confirmed that existing structures of the carrier grid have the efficiency of retaining the foreign objects of random shape of 50...60%, which was not sufficient in practice, since unsealing of fuel element claddings for this reason is ~56% of the total number of failures.

The closest in technical substance and achieved result is a fuel assembly of the third generation RK-3 for a VVER-440 reactor (RU2410771 dated May 05, 2009, G21C3/30).

The known fuel assembly comprises a head and a tail connected by support corner elements connected in their turn by contact welding with spacer grids assembled from welded cells installed in the triangular grid, and instead of several fuel elements there are hollow frame pipes that are rigidly connected with the corresponding cells.

Spacer grids are connected to the centre tube by the joint moving in the axial direction.

The total quantity of fuel elements in the known fuel assembly varies from 120 to 123.

The main fault of the known fuel assembly is reduced charge of fuel at the expense of reduction in the quantity of fuel elements from 126 to 120... 123.

Corner elements cover 3 corner fuel elements each, and introduction of frame pipes to increase rigidity of the fuel assembly as evident from practice does not compensate the absence of the hexagonal casing.

The known fuel assembly may be equipped with an anti-debris filter of conical shape, made of a set of rings installed with a certain gap along the tail axis.

There is also a known anti-debris filter for a fuel assembly of a VVER-1000 nuclear reactor installed in a tail representing a perforated plate with holes in the form of slots shaped as V (RU 2264666 dated January 16, 2004, G21C3/30).

However, these known designs of the anti-debris filter, having rather high efficiency in respect to curvilinear foreign objects, are practically inefficient against foreign objects in the form of rectilinear rods and flat objects of large width of any length having the thickness of less than 2 mm.

There is a known anti-debris filter of the second generation made of two groups of inclined plats installed at the angles so that it is non-transparent in the axial direction (RU2610716, dated February 15, 2017, G21C3/30). Such anti-debris filter, according to the completed research, has the highest efficiency with minimum hydraulic resistance.

The anti-debris filter 9 may be installed in the cross section of the tail at the inlet or outlet of the coolant from the tail.

The specified anti-debris filter may be made of stainless steel of X18H10T type using the state-of-the-art digital highly efficiency technology of gas laser cutting mastered in serial production. Besides, such anti-debris filter may be made of stainless steel with the help of promising additive technologies.

Another known prior art (FR3018386A1) discloses a fuel assembly for a fast reactor and a reactor core loaded with it. Said fuel assembly comprises a plurality of fuel pins filled with fissile material as fuel is bundled and stored in a casing tube. The fuel pin is filled with a plurality of fuel pellets in a stainless steel cladding tube, forms a space at the fuel region, and constitutes a gas plenum region. The fuel assembly is constructed to provide apertures that include the lower end of the gas plenum region and extend upward into the shroud tube's side walls. By forming the openings so that they do not overlap with the fuel region, the upper end of the fuel region, where the temperature of a fuel rod cladding tube is highest, can be cooled by a coolant. Said fuel assembly is capable of avoiding the blockage of the coolant flow caused by the voids generated at the time of the transient phenomenon, such as the loss of coolant flow, and so on, and of avoiding the decrease in the thermal margin of the fuel pin during normal operation.

### DISCLOSURE OF THE INVENTION

The objective of this invention is to increase energy generation of a fuel assembly of a VVER-440 nuclear reactor with simultaneous reduction of labour intensiveness of its manufacturing.

The technical result of the invention is improvement of mechanical characteristics, reliability, and operability of a fuel assembly of a VVER-440 nuclear reactor at the expense of its design improvement.

This technical result is achieved by the fact that the fuel assembly of the nuclear reactor comprising a bundle of 126 fuel elements 1, arranged in a regular triangular grid in spacer grids 3, joined with a centre tube 4, a hexagonal casing 7, joined with a head 5 and a tail 6, differing by the fact that the casing has a through longitudinal slot 10 in the middle of each face for the entire length of the casing, with width of 22, equal to (0.6...1.0)·t at the level of the bundle, where "t" is spacing 23 of the grid for arrangement of fuel elements 1, and in the gaps between the spacer grids the flanges 11 at the edges of the slots 10 inside the bundle of fuel elements for depth of 20 equal to (0.3...0.5)·d, where "d" is the outer diameter 24 of the fuel element 1, and corner parts of the casing 12 are connected by spot welding with a cladding ring 14, connected to the head with a dismountable j oint, spacer grids and a centre tube 4 to form a heavy-duty frame, besides, the centre tube is rigidly joined to centre sleeves 16 of the spacer grids by spot welding.

### EMBODIMENTS OF INVENTION

In the first embodiment of the fuel assembly design all 6 corner parts of the casing 12 are identical and cover 5 fuel elements each, besides, they have the largest possible size, which positively influences the rigidity of the fuel assembly.

The total quantity of the fuel elements covered by the casing in this option is 30.

In the second embodiment the casing may have a through longitudinal slot on each face for the entire length of the casing, with width of (1.6...2.0)·t at the level of the bundle, where "t" is spacing of the grid for arrangement of the fuel elements, the middle 25 of whicht is displaced in the transverse direction relative to the middle of the face 27 by half of the spacing 26 of the grid for arrangement of fuel elements 1, which facilitates welding of the fuel assembly frame due to wider slots and reduces labour intensiveness of the fuel assembly manufacturing.

In this embodiment the slots in the adjacent faces of the casing are displaced towards the common rib, the corner parts of the casing arranged at 120° relative to the central axis of the fuel assembly are similar to the first option 12 and cover 5 fuel elements each, and the remaining 3 parts have smaller size 19 and cover 3 fuel elements each.

In this embodiment the axes of slots in the adjacent faces of the casing are displaced towards the common rib in opposite directions, in all 3 pairs of faces, all parts of the casing are identical, have asymmetrical shape 21 and cover 4 fuel elements each.

The total quantity of the fuel elements covered by the casing in both cases is 24, as well as in the previous case. However, in this option as well the rigidity of the proposed fuel assembly is higher than in the known one, since in the known assembly the number of the fuel elements covered by the casing is only 18.

The spacer grids 3 are made of zirconium alloy E110 and cells 8, connected to each other with a centre sleeve 16 and with a rim by spot welding.

The nominal value of the spacing in the grid for arrangement of the fuel elements is 12.6 mm, and of the outer diameter of the fuel element - 9.1 mm. The head, tail and spacer grid are made of stainless steel of X18H10T type. The corner parts of the casing may be made in both options preferably from zirconium alloy E635, with thickness of 0.65 mm, and are connected on top by contact spot welding with a cladding ring from a sheet of zirconium alloy E125 with thickness of 2 mm. In the lower part they have holes 13 for connection with the tail 6.

Besides, the corner parts of the casing are connected by contact spot welding with extensions 15 of rims in spacer grids along their entire width, which gives the highest rigidity to the fuel assembly when twisted or bent. The spacer grid rim is made of six shaped plates 18. The quantity of the weld points may vary depending on the option of the fuel assembly.

Repairability, i.e. the ability to extract and replace a fuel element that was unsealed in process of operation is the necessary requirement to state-of-the-art structures of the fuel assemblies.

Therefore, the fuel elements are connected to the carrier grid welded to the tail, with a dismountable collet joint.

The cladding ring of the proposed fuel assembly is connected by the dismountable threaded joint with the head, and the lower parts of the casing are connected to the tail with a fixed joint, which provides for the specified requirement of the proposed fuel assembly.

To extract the fuel element, it is necessary to remove the head remotely, therefore, in the proposed fuel assembly the connection between the head and the cladding ring is dismountable and consists of 6 screws.

In the known designs of the fuel assemblies, usually the head is removed together with the casing, and the connection between the casing and the tail is dismountable, which is more labour-intensive than removal of the head in the proposed fuel assembly.

The conducted research demonstrated that in the known fuel assemblies the probability of extraction of the unsealed fuel element is ~50% due to the damage of the cladding in process of operation and high effort required for its extraction.

The spacer grids are connected to the centre tube by spot welding with the protruding part of the centre sleeve 16 of the grid, where longitudinal slots 17 are arranged.

Such design improvement makes it possible to reduce warpage of the spacer grids, to considerably reduce the effort to extract the fuel elements and the effort of slipping of a bundle of fuel elements in process of operation and, as the conducted experiments demonstrated, to exclude the phenomenon of "gripping" of the bundle of the fuel elements and damage of the spacer grids.

Application of the proposed design of the fuel assembly provides the following technical effect:
- increased charge of nuclear fuel;
- improvement of mechanical characteristics and reduced curvature of the fuel assembly due to increased dimensions of the dimensions of the casing corner parts;
- reduced level of the stressed deformed state of design elements in the fuel assembly due to reduction of warpage of the spacer grids and efforts of slipping of fuel elements as a result of spacer grids welding to the centre tube;
- reduced debris-damage to claddings of the fuel elements at the expense of installation of the anti-debris filter of the second generation;
- reduced effort and higher probability of fuel element extraction in process of repair of the failed fuel assembly at the expense of reduction in warpage of the spacer grids;
- reduced labour intensiveness of manufacturing at the expense of reduction in the volume of welding (exclusion of welding of frame pipes and spacer grids).

The proposed improvements to the fuel assembly design result in increase of its reliability and operability, and in the end in increase of energy generation by a VVER type nuclear reactor.

### BRIEF DESCRIPTION OF THE DRAWINGS

The essence of the invention is also explained by graphic materials.

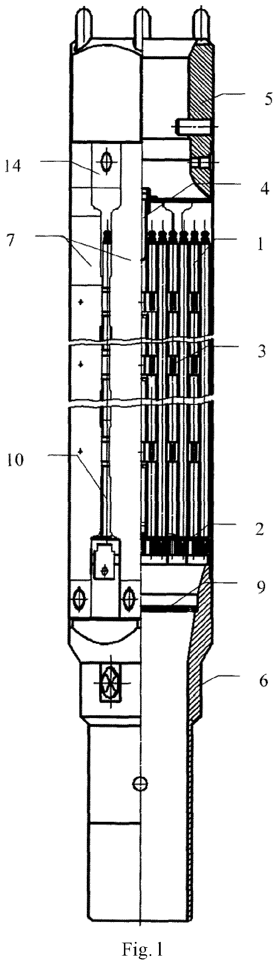

Fig. 1 shows the proposed fuel assembly.

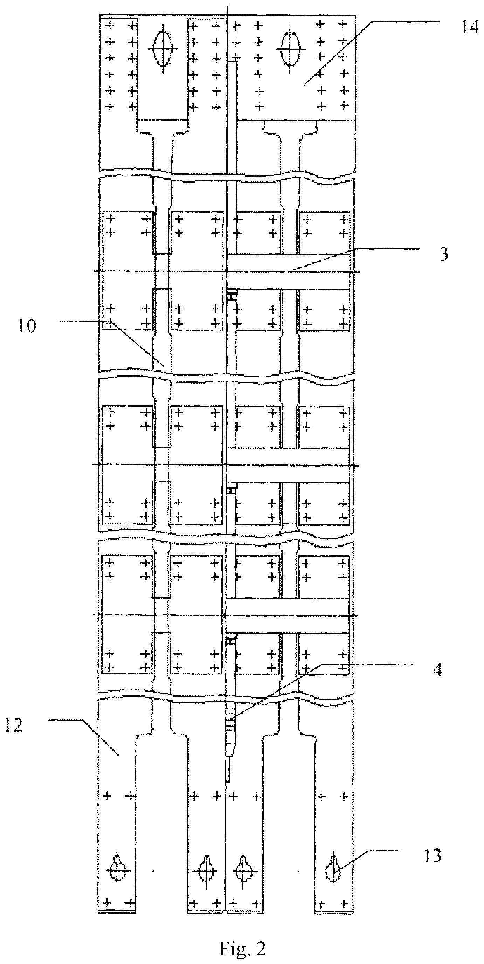

Fig. 2 shows the frame of the proposed fuel assembly (symbol + shows weld points).

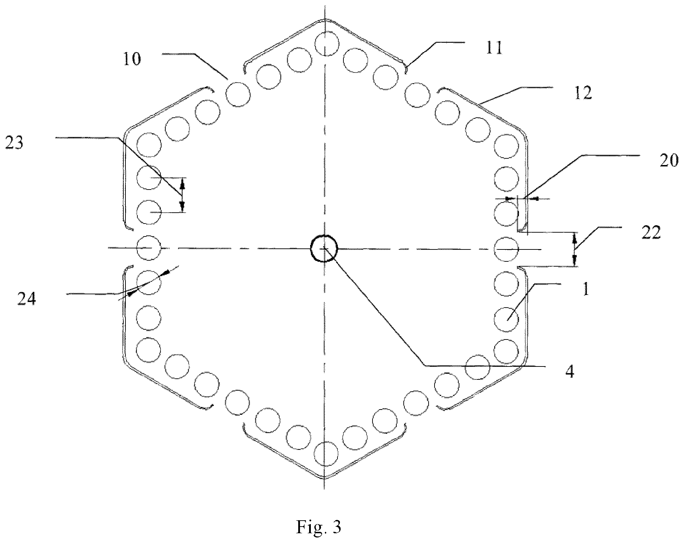

Fig. 3 shows the cross section of the bundle of the fuel assembly according to the first option. Only peripheral fuel elements are shown.

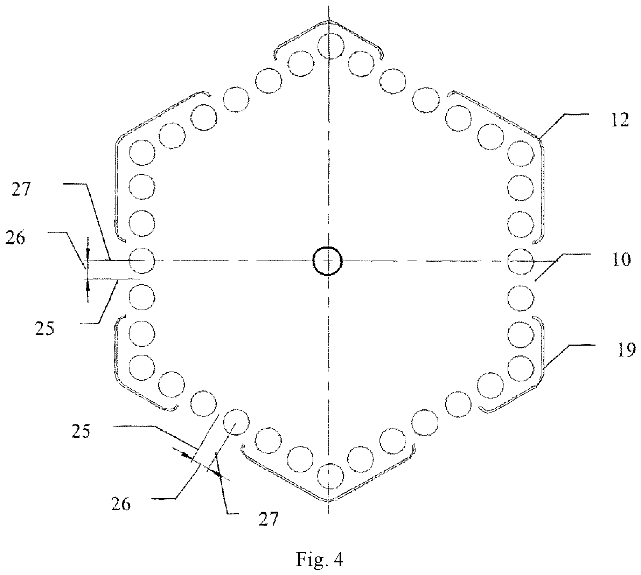

Fig. 4 shows the cross section of the bundle in the fuel assembly according to the second option (displacement of slots in the adjacent faces of the casing in direction of the common rib). Only peripheral fuel elements are shown.

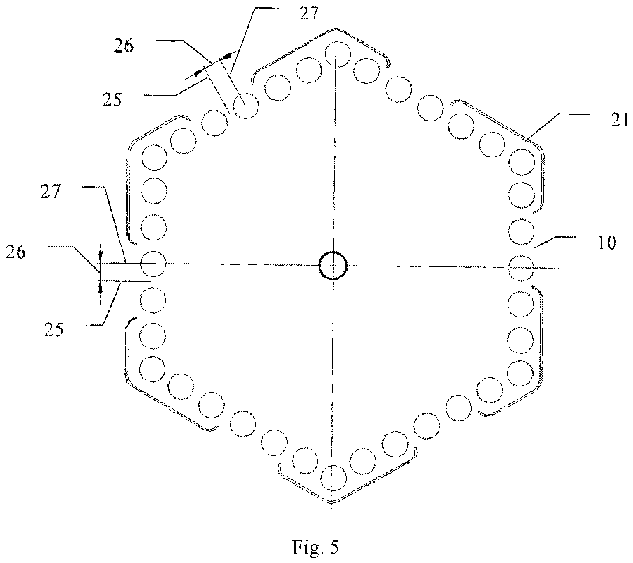

Fig. 5 shows the cross section of the bundle in the fuel assembly according to the second option (displacement of slots in the adjacent faces of the casing in respect to the common rib in opposite directions). Only peripheral fuel elements are shown.

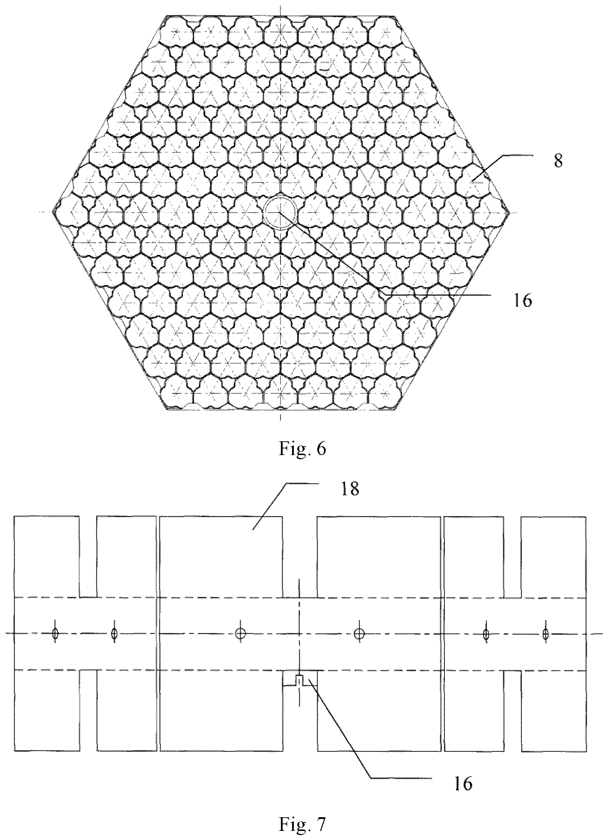

Fig. 6 shows a cellular spacer grid (top view).
Fig. 7 shows a cellular spacer grid (side view).

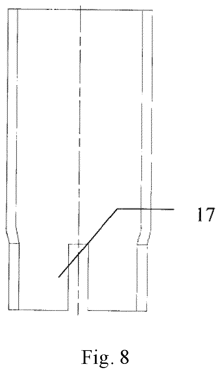

Fig. 8 shows a centre sleeve of the spacer grid.

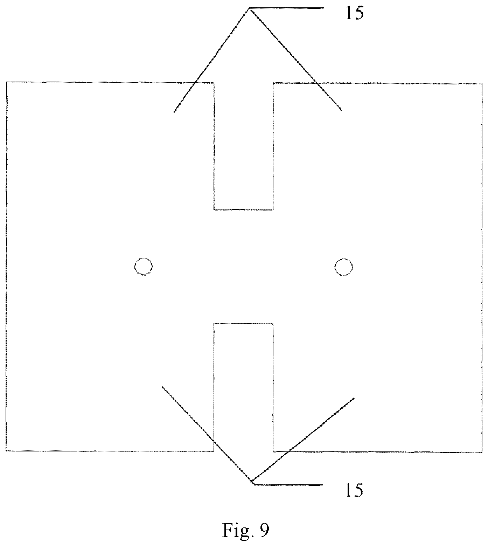

Fig. 9 shows a plate of the spacer grid rim.

## Claims

1. A nuclear reactor fuel assembly comprising a bundle of 126 fuel elements (1) arranged in a regular triangular positioning grid in spacer grids (3) connected to a centre tube (4), a hexagonal casing (7) connected to a head (5) and a tail (6), wherein casing (7) has, at the centre of each of its faces, a longitudinal through slot (10) which runs the entire length of the casing (7) and has a width (22) of [0.6 ... 1.0]·t at the level of the bundle, where t is the distance (23) between the symmetry axes of the adjacent fuel elements (1); in the spaces between the spacer grids (3), flanges (11) are provided along the edges of said slots (10), which extend inside the fuel element bundle to a depth (20) of [0.3 ... 0.5] ·d, where d is the outside diameter (24) of the cladding of the fuel element (1); and corner parts (12) of the casing (7) are connected by spot welding to a cladding ring (14), connected to the head (5) via a dismountable joint, the spacer grids (3) and the centre tube (4) + to form a heavy-duty frame, wherein the centre tube (4) is rigidly connected to centre sleeves (16) of the spacer grids (3) by spot welding.

2. The nuclear reactor fuel assembly according to claim 1, wherein the spacer grids (3) are made of zirconium alloy E110 and composed of cells (8) connected to each other, to the centre sleeve (16) and to a rim by spot welding.

3. The nuclear reactor fuel assembly according to claim 1, wherein the centre sleeve (16) of the spacer grid (3) in a part protruding beyond the grid field has longitudinal slots (17) to ensure a tight welded joint with the centre tube (4).

4. The nuclear reactor fuel assembly according to claim 1, wherein the fuel elements (1) tare connected to a carrier grid, the carrier grid welded to the tail (6) by the collet joint.

5. The nuclear reactor fuel assembly according to claim 1, wherein the corner parts (12) of the casing (7) are made of zirconium alloy E365, and the cladding ring (14) is made of zirconium alloy E125.

6. The nuclear reactor fuel assembly according to claim 1, wherein the head (5), the tail (6) and a carrier grid are made of stainless steel of X18H10T type.

7. The nuclear reactor fuel assembly according to claim 1, wherein the corner parts (12) of the casing (7) are connected to the tail (6) by a dismountable threaded joint.

8. A nuclear reactor fuel assembly comprising a bundle of 126 fuel elements (1) arranged in a regular triangular positioning grid in spacer grids (3) connected to a centre tube (4), a hexagonal casing (7) connected to a head (5) and a tail (6), wherein the casing (7) has, at the centre of each of its faces, a longitudinal through slot (10) which runs the entire length of the casing (7) and has a width (22) of [1.6 ... 2]·t at the level of the bundle, where t is the distance (23) 29- between the symmetry axes of the adjacent fuel elements (1), which is transversely offset relative to the face centre by t/2; in the spaces between the spacer grids (3), flanges (11) are provided along the edges of said slots (10) which extend inside the fuel element bundle to a depth (20) of [0.3 ... 0.5]·d, where d is the outside diameter of the cladding of the fuel element (1);
and corner parts (12) of the casing (7) are connected by spot welding to a cladding ring (14), connected to the head (5) via a dismountable joint, the spacer grids (3) and the centre tube (4) to form a heavy-duty frame, wherein the centre tube (4) is rigidly connected to centre sleeves (16) of the spacer grids (3) by spot welding.

9. The nuclear reactor fuel assembly according to claim 8, wherein the spacer grids (3) are made of zirconium alloy E110 and composed of cells (8) connected to each other, to the centre sleeve (16) and to a rim by spot welding.

10. The nuclear reactor fuel assembly according to claim 8, wherein the centre sleeve (16) of the spacer grid (3) in a part protruding beyond the grid field has longitudinal slots (17) to ensure a tight welded joint with the centre tube (4).

11. The nuclear reactor fuel assembly according to claim 8, wherein the fuel elements (1) are connected to a carrier grid, the carrier grid welded to the tail (6) by the collet joint.

12. The fuel nuclear reactor fuel assembly according to claim 8, wherein the corner parts (12) of the casing (7) are made of zirconium alloy E365, and the cladding ring (14) is made of zirconium alloy E125.

13. The nuclear reactor fuel assembly according to claim 8, wherein the head (5), the tail (6) and a carrier grid are made of stainless steel of X18H10T type.

14. The nuclear reactor fuel assembly according to claim 8, wherein the corner parts (12) of the casing (7) are connected to the tail (6) by a dismountable threaded joint.

## Patentansprüche

1. Kernreaktorbrennelementanordnung, die ein Bündel von 126 Brennelementen (1) enthält, die entlang eines regelmäßigen dreieckigen Gitters in Abstandsgittern (3) angeordnet sind, die mit dem Zentralrohr (4) verbunden sind, eine sechseckige Abdeckung (7), die mit dem Kopf (5) und dem Schaft (6) verbunden ist, **dadurch gekennzeichnet, dass** die Abdeckung (7) in der Mitte jeder Seite einen durchgehenden Längsschlitz (10) für die gesamte Länge der Abdeckung (7) aufweist, mit einer Breite (22) (0,6...1,0) von t auf Höhe des Bündels, wobei t der Abstand (23) zwischen den Symmetrieachsen benachbarter Brennelemente (1) ist, und in den Spalten zwischen den Abstandsgittern (3) Biegungen (11) entlang der Ränder der Schlitze (10) vorhanden sind, die sich innerhalb des Bündels der Brennelemente bis zu einer Tiefe (20) von (0,3...0,5) d erstrecken, wobei d der Außendurchmesser (24) der Hülle des Brennelements (1) ist; und die Eckteile (12) der Abdeckung (7) mit der Schale (14), die mit dem Kopf (5) durch eine zerlegbare Verbindung verbunden ist, mit den Abstandsgittern (3) und dem Zentralrohr (4) punktgeschweißt sind, um einen Kraftrahmen zu bilden, wobei das Zentralrohr (4) starr mit den zentralen Hülsen (16) der Abstandsgitter (3) punktgeschweißt ist.

2. Kernreaktorbrennelementanordnung nach Anspruch 1, **dadurch gekennzeichnet, dass** die Abstandsgitter (3) aus der E110-Zirkoniumlegierung und Zellen (8) bestehen, die miteinander, mit der zentralen Hülse (16) und mit dem Rand punktgeschweißt sind.

3. Kernreaktorbrennelementanordnung nach Anspruch 1, **dadurch gekennzeichnet, dass** die zentrale Hülse (16) des Abstandsgitters (3) im äußersten Abschnitt des Gitters Längsnuten (17) aufweist, um eine dichte Schweißverbindung mit dem Zentralrohr (4) bereitzustellen.

4. Kernreaktorbrennelementanordnung nach Anspruch 1, **dadurch gekennzeichnet, dass** die Brennelemente (1) mit dem mit dem Schaft (6) verschweißten Trägergitter durch eine Spannzange verbunden sind.

5. Kernreaktorbrennelementanordnung nach Anspruch 1, wobei die Eckteile (12) der Abdeckung (7) aus der E365-Zirkoniumlegierung hergestellt sind und die Schale (14) aus der E125-Zirkoniumlegierung hergestellt ist.

6. Kernreaktorbrennelementanordnung nach Anspruch 1, **dadurch gekennzeichnet, dass** der Kopf (5), der Schaft (6) und das Trägergitter aus rostfreiem Stahl vom Typ X18H10T bestehen.

7. Kernreaktorbrennelementanordnung nach Anspruch 1, wobei die Eckteile (12) der Abdeckung (7) durch eine nicht lösbare Gewindeverbindung mit dem Schaft (6) verbunden sind.

8. Kernreaktorbrennelementanordnung, die ein Bündel von 126 Brennelementen (1) enthält, die entlang eines regelmäßigen dreieckigen Gitters in Abstandsgittern (3) angeordnet sind, die mit dem Zentralrohr (4) verbunden sind, eine sechseckige Abdeckung (7), die mit dem Kopf (5) und dem Schaft (6) verbunden ist, **dadurch gekennzeichnet, dass** die Abdeckung (7) an jeder Seite einen durchgehenden Längsschlitz (10) für die gesamte Länge der Abdeckung (7) aufweist, mit einer Breite (22) (1,6...2,0) von t auf Höhe des Bündels, wobei t der Abstand (23) zwischen den Symmetrieachsen benachbarter Brennelemente (1) ist, die quer zur Seitenmitte um t/2 versetzt ist, und in den Spalten zwischen den Abstandsgittern (3) Biegungen (11) entlang der Ränder der Schlitze (10) vorhanden sind, die sich innerhalb des Bündels der Brennelemente bis zu einer Tiefe (20) von (0,3...0,5) d erstrecken, wobei d der Außendurchmesser der Hülle des Brennelements (1) ist und die Eckteile (12) der Abdeckung (7) mit der Schale (14), die mit dem Kopf (5) durch eine zerlegbare Verbindung verbunden ist, mit den Abstandsgittern (3) und dem Zentralrohr (4) punktgeschweißt sind, um einen Kraftrahmen zu bilden, wobei das Zentralrohr (4) starr mit den zentralen Hülsen (16) der Abstandsgitter (3) punktgeschweißt ist.

9. Kernreaktorbrennelementanordnung nach Anspruch 8, **dadurch gekennzeichnet, dass** die Abstandsgitter (3) aus der E110-Zirkoniumlegierung und Zellen (8) bestehen, die miteinander, mit der zentralen Hülse (16) und mit dem Rand punktgeschweißt sind.

10. Kernreaktorbrennelementanordnung nach Anspruch 8, **dadurch gekennzeichnet, dass** die zentrale Hülse (16) des Abstandsgitters (3) im äußersten Abschnitt des Gitters Längsnuten (17) aufweist, um eine dichte Schweißverbindung mit dem zentralen Rohr (4) bereitzustellen.

11. Kernreaktorbrennelementanordnung nach Anspruch 8, **dadurch gekennzeichnet, dass** die Brennelemente (1) mit dem mit dem Schaft (6) verschweißten Trägergitter durch eine Spannzange verbunden sind.

12. Kernreaktorbrennelementanordnung nach Anspruch 8, wobei die Eckteile (12) der Abdeckung (7) aus der E365-Zirkoniumlegierung hergestellt sind und die Schale (14) aus der E125-Zirkoniumlegierung hergestellt ist.

13. Kernreaktorbrennelementanordnung nach Anspruch 8, **dadurch gekennzeichnet, dass** der Kopf (5), der Schaft (6) und das Trägergitter aus rostfreiem Stahl vom Typ X18H10T bestehen.

14. Kernreaktorbrennelementanordnung nach Anspruch 8, wobei die Eckteile (12) der Abdeckung (7) durch eine nicht lösbare Gewindeverbindung mit dem Schaft (6) verbunden sind.

## Revendications

1. Assemblage combustible du réacteur nucléaire qui contient un faisceau de 126 unités de combustible (1) placées à un réseau triangulaire régulier dans les grilles d'espacement (3) liées au tube central (4), un coffret hexagonal (7) lié à la tête (5) et à la queue (6), qui se distingue par ce qu'au centre de chaque face du coffret (7) il y a une rainure longitudinale traversante (10) sur toute la longueur du coffret (7), large (22) de (0,6... 1,0) *t* au niveau du faisceau, où t est la distance (23) entre les axes de symétrie des unités de combustible (1) voisines, et dans les espaces intermédiaires entre les grilles d'espacement (3) il y a des recourbures (11) prévues sur les extrémités des rainures (10) qui entrent à l'intérieur du faisceau des unités de combustible à la profondeur (20) de (0,3...0,5) *d,* où *d* est le diamètre extérieur (24) du manteau de l'unité de combustible (1), et les parties angulaires (12) du coffret (7) sont reliées à l'aide du soudage par points à la virole (14) liée à la tête (5) par un assemblage démontable, par les grilles d'espacement (3) et par le tube central (4) pour la formation d'une ossature porteuse, le tube central (4) étant solidaire des douilles centrales (16) des grilles d'espacement (3) à l'aide du soudage par points.

2. Assemblage combustible du réacteur nucléaire selon la revendication 1, dans lequel les grilles d'espacement (3) sont réalisées de l'alliage de zirconium E110 et des mailles (8) liées l'une à l'autre, à la douille centrale (16) et à la jante à l'aide du soudage par points.

3. Assemblage combustible du réacteur nucléaire selon la revendication 1, dans lequel la douille centrale (16) de la grille d'espacement (3) a des cannelures longitudinales (17) dans sa partie qui dépasse le champ de la grille pour garantir un raccord en soudure étanche avec le tube central (4).

4. Assemblage combustible du réacteur nucléaire selon la revendication 1, dans lequel les unités de combustible (1) sont liées à la grille porteuse qui est soudée à la queue (6) par un raccord à pince.

5. Assemblage combustible du réacteur nucléaire selon la revendication 1, dans lequel les parties angulaires (12) du coffret (7) sont réalisées en alliage de zirconium E365, et la virole (14) est réalisée en alliage de zirconium E125.

6. Assemblage combustible du réacteur nucléaire selon la revendication 1, dans lequel la tête (5), la queue (6) et la grille porteuse sont réalisées en acier inoxydable du type X18H10T.

7. Assemblage combustible du réacteur nucléaire selon la revendication 1, dans lequel les parties angulaires (12) du coffret (7) sont liées à la queue (6) par un raccord fileté indémontable.

8. Assemblage combustible du réacteur nucléaire qui contient un faisceau de 126 unités de combustible (1) placées au réseau triangulaire régulier dans les grilles d'espacement (3) liées au tube central (4), un coffret hexagonal (7) lié à la tête (5) et à la queue (6), qui se distingue par ce que chaque face du coffret (7) a une rainure longitudinale traversante (10) sur toute la longueur du coffret (7), large (22) de (1,6...2,0) t au niveau du faisceau, où t est la distance (23) entre les axes de symétrie des unités de combustible (1) voisines, qui est déplacé dans la direction transversale par rapport au centre de la face à t/2, et dans les espaces intermédiaires entre les grilles d'espacement (3) il y a des recourbures (11) prévues sur les extrémités des rainures (10) qui entrent à l'intérieur du faisceau des unités de combustible à la profondeur (20) de (0,3...0,5) *d,* où *d* est le diamètre extérieur du manteau de l'unité de combustible (1), et les parties angulaires (12) du coffret (7) sont liées à l'aide du soudage par points à la virole (14) qui est liée à la tête (5) par un assemblage démontable, par les grilles d'espacement (3) et par le tube central (4) pour la formation d'une ossature porteuse, le tube central (4) étant solidaire des douilles centrales (16) des grilles d'espacement (3) à l'aide du soudage par points.

9. Assemblage combustible du réacteur nucléaire selon la revendication 8, dans lequel les grilles d'espacement (3) sont réalisées de l'alliage de zirconium E110 et des mailles (8) liées l'une à l'autre, à la douille centrale (16) et à la jante à l'aide du soudage par points.

10. Assemblage combustible du réacteur nucléaire selon la revendication 8, dans lequel la douille centrale (16) de la grille d'espacement (3) a des cannelures longitudinales (17) dans sa partie qui dépasse le champ de la grille pour garantir un raccord en soudure étanche avec le tube central (4).

11. Assemblage combustible du réacteur nucléaire selon la revendication 8, dans lequel les unités de combustible (1) sont liées à la grille porteuse qui est soudée à la queue (6) par un raccord à pince.

12. Assemblage combustible du réacteur nucléaire selon la revendication 8, dans lequel les parties angulaires (12) du coffret (7) sont réalisées en alliage de zirconium E365, et la virole (14) est réalisée en alliage de zirconium E125.

13. Assemblage combustible du réacteur nucléaire selon la revendication 8, dans lequel la tête (5), la queue (6) et la grille porteuse sont réalisées en acier inoxydable du type X18H10T.

14. Assemblage combustible du réacteur nucléaire selon la revendication 8, dans lequel les parties angulaires (12) du coffret (7) sont liées à la queue (6) par un raccord fileté indémontable.
